(19) Europäisches Patentamt
European Patent Office
Office européen des brevets

(11) **EP 4 443 247 B1**

(12) **FASCICULE DE BREVET EUROPEEN**

(45) Date de publication et mention de la délivrance du brevet:
**20.08.2025 Bulletin 2025/34**

(21) Numéro de dépôt: **23167062.1**

(22) Date de dépôt: **06.04.2023**

(51) Classification Internationale des Brevets (IPC):
**G04C 10/00** (2006.01) **G04C 3/10** (2006.01)
**G04B 19/30** (2006.01)

(52) Classification Coopérative des Brevets (CPC):
**G04C 10/00; G04B 19/30; G04C 3/102**

(54) **PIÈCE D'HORLOGERIE COMPORTANT UNE MICRO-GÉNÉRATRICE ET UNE SOURCE LUMINEUSE**

UHR MIT MIKROGENERATOR UND LICHTQUELLE

TIMEPIECE COMPRISING A MICROGENERATOR AND A LIGHT SOURCE

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(43) Date de publication de la demande:
**09.10.2024 Bulletin 2024/41**

(73) Titulaire: **The Swatch Group Research and Development Ltd**
**2074 Marin (CH)**

(72) Inventeurs:
• **TORTORA, Pierpasquale**
**2000 Neuchâtel (CH)**
• **HINAUX, Baptiste**
**1003 Lausanne (CH)**
• **NICOLAS, Cédric**
**2000 Neuchâtel (CH)**
• **BORN, Jean-Jacques**
**1110 Morges (CH)**

(74) Mandataire: **ICB SA**
**Faubourg de l'Hôpital, 3**
**2001 Neuchâtel (CH)**

(56) Documents cités:
EP-A1- 3 838 424     CH-A2- 717 809
FR-A1- 2 262 825     JP-A- 2005 207 810
JP-A- 2010 286 428     JP-A- H1 155 976

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

**Description**

Domaine technique de l'invention

L'invention concerne le domaine des pièces d'horlogerie, notamment celles munies d'un mouvement mécanique, comportant une micro-génératrice pour l'alimentation en énergie de circuits particuliers, en particulier de moyens d'éclairage.

Arrière-plan technologique

Sur le marché on a déjà eu des montres du type mécanique avec divers systèmes d'éclairage additionnels. Dans une réalisation particulière, divulguée dans le document EP 3838424, un dispositif d'éclairage est alimenté par une micro-génératrice, aussi nommée 'génératrice', dont la rotation est assurée par un ressort de barillet, ce dispositif d'éclairage étant agencé sur un support fixe du mouvement horloger dans une région située à la périphérie du rotor de la micro-génératrice. Les bobines de la micro-génératrice sont portées par son stator alors que le rotor porte classiquement des aimants permanents.

Les systèmes d'éclairage connus présentent des inconvénients majeurs pour une montre munie d'un mouvement mécanique, en particulier pour une montre haut de gamme pour laquelle il est important de conserver le plus possible le caractère mécanique de la montre. En effet, ces systèmes d'éclairage connus sont munis d'au moins un élément électroluminescent, d'un circuit électronique et d'un circuit électrique qui sont agencés sur un support fixe à la périphérie du rotor de la micro-génératrice, ce qui d'une part introduit un dispositif du type électronique dans la montre et, d'autre part, étend le dispositif d'éclairage proprement dit (c'est-à-dire les éléments intervenant dans la génération de lumière) au-delà de la surface horizontale définie par le rotor, premièrement par l'étendue des bobines du stator et ensuite par l'agencement dudit au moins un élément électroluminescent, du circuit électronique et du circuit électrique (en général un PCB) qui relie le circuit électronique d'une part aux bobines et d'autre part audit au moins un élément électroluminescent. L'ensemble de toutes ces parties électriques et électroniques stationnaires occupe une surface relativement importante au-delà de la surface définie par le rotor de la micro-génératrice, en plus d'accentuer, pour un consommateur, un caractère hybride de la montre.

Résumé de l'invention

L'invention se propose de solutionner notamment les problèmes de l'art antérieur indiqués précédemment. D'autres objectifs ressortiront aussi de la description de l'invention qui suit.

A cet effet, l'invention concerne une pièce d'horlogerie selon la revendication 1, laquelle comporte une micro-génératrice comprenant un rotor, portant au moins une bobine et au moins une diode électroluminescente alimentée par au moins une dite bobine, et un stator comportant des aimants permanents.

Selon une première caractéristique de l'invention, le rotor porte la totalité de l'équipement électrique et électronique formé par ladite au moins une diode électroluminescente, ladite au moins une bobine et, le cas échéant, un circuit électrique ou/et électronique agencé entre ladite au moins une dite bobine et ladite au moins une diode électroluminescente.

Selon une caractéristique avantageuse, les aimants permanents sont situés, en projection axiale, à l'intérieur d'une surface circulaire définie par le rotor lorsqu'il tourne.

Selon une autre caractéristique avantageuse, au moins une dite diode électroluminescente, de préférence ladite au moins une diode électroluminescente est alimentée directement par au moins une dite bobine lors de sa rotation par rapport au stator de la micro-génératrice.

Brève description des figures

Les buts, avantages et caractéristiques de l'invention apparaîtront mieux à la lecture de la description détaillée qui va suivre, et en référence aux dessins annexés, où:

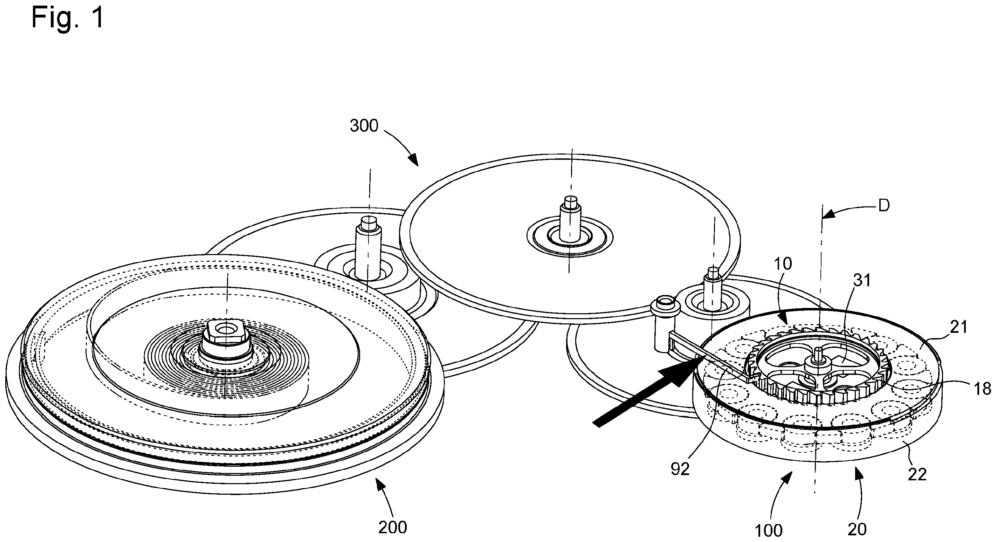

- la figure 1 représente, de façon schématisée et en perspective, un exemple d'application de l'invention à une montre comportant un dispositif d'éclairage : en partie gauche de la figure est visible un barillet, qui alimente, au travers d'un rouage, une micro-génératrice, laquelle comporte un rotor mobile en rotation face à un stator; la micro-génératrice porte au moins une diode électroluminescente qui est alimentée par au moins une bobine, et qui est montée sur le rotor, excentrée par rapport à l'axe de rotation du rotor, tandis que le stator porte des aimants permanents; ce rotor porte un rochet, qui coopère avec un cliquet pour libérer ou bloquer sa rotation, la flèche indique schématiquement un dispositif d'actionnement du cliquet qui est mobile en rotation pour stopper et libérer la génératrice;

- la figure 2A représente, de façon schématisée et en perspective, la micro-génératrice de la figure 1: les deux anneaux du stator portent des aimants permanents, en polarités alternées, et, dans leur entrefer, le rotor porte des bobines; les flèches montrent les sens alternés du champ magnétique, selon une même direction parallèle à l'axe de rotation du rotor; celui-ci porte deux diodes électroluminescentes montées en symétrie par rapport à cet axe de rotation, et toutes deux excentrées;
- la figure 2B est une vue de dessus de la micro-génératrice de la figure 1;
- la figure 3 représente, de façon schématisée et en perspective éclatée, la micro-génératrice des figures 1 et 2A, 2B: le disque rotor porte 12 bobines, on voit la double rangée de 12 aimants des anneaux statoriques, et la position excentrée des diodes électroluminescentes;
- la figure 4 représente, de façon schématisée et en vue de dessus, selon la direction de l'axe de rotation, le rotor de la micro-génératrice des figures 1 à 3; on y voit la connectique des bobines entre elles et avec les diodes électroluminescentes; un moyeu axial supporte le rotor, et porte encore un anneau ajouré comportant huit ouvertures pour laisser passer la lumière émise par chaque diode électroluminescente vers un dispositif d'illumination de la pièce d'horlogerie;
- la figure 5 est une coupe, selon la ligne V-V, passant par l'axe de rotation de la micro-génératrice des figures 1 à 4; dans cet exemple avantageux mais non limitatif, les dimensions de la micro-génératrice sont très réduites, avec une cage statorique de diamètre 8,4 mm, et épaisseur de 1,4 mm;

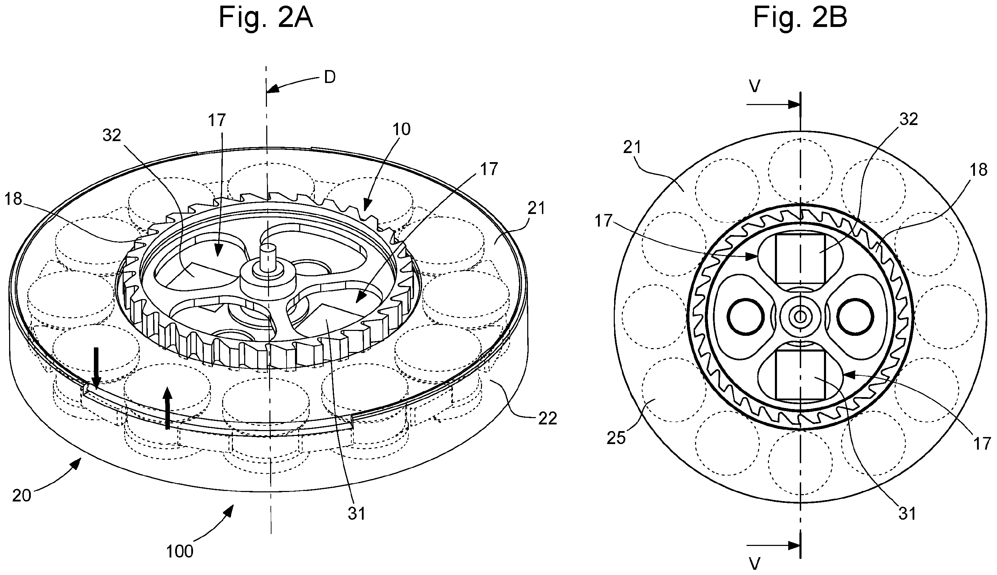

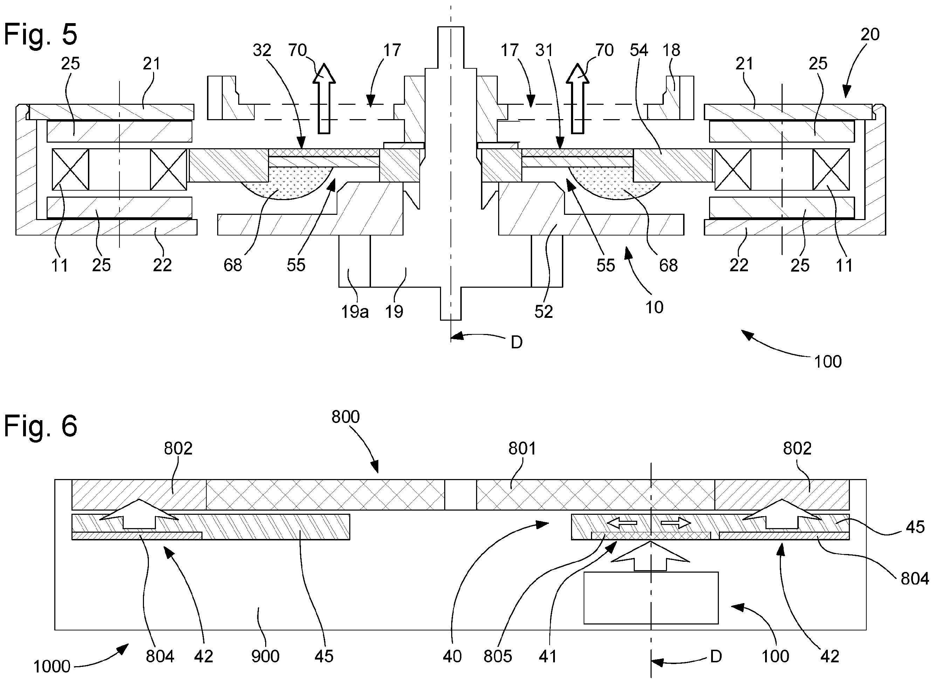

- la figure 6 représente, de façon schématisée et en coupe, passant par l'axe de rotation de la micro-génératrice des figures 1 à 5, le dispositif d'illumination de la pièce d'horlogerie selon l'invention, illustré pour le cas particulier et non limitatif d'éclairage d'une zone annulaire d'un cadran de montre représenté en partie supérieure de la figure avec une partie centrale opaque et une partie périphérique annulaire transflective, et qui comporte, sous cette dernière, une structure guide de lumière stationnaire, qui elle-même est située au-dessus de la micro-génératrice lumineuse, cachée ici, de façon non limitative, par la partie opaque du cadran. Cette structure guide de lumière stationnaire comporte, sous la partie opaque et sous la partie transflective du cadran, un guide de lumière qui comporte, d'une part, une zone d'introduction et d'injection superposée à la trajectoire de chaque diode électroluminescente pendant la rotation du rotor de la micro-génératrice et agencée pour introduire de la lumière émise par chaque diode électroluminescente dans le guide de lumière, symbolisée par une première flèche dans le guide de lumière, et d'autre part une zone de sortie et d'extraction de la lumière hors du guide de lumière, symbolisée par une deuxième flèche en périphérie, sous une partie transflective du cadran. On distingue, au-dessus de la micro-génératrice et de la première flèche, une zone cachée par une partie opaque, d'où partent deux petites flèches, et qui est une zone de couplage, structurée avec un profil diffusif, pour effectuer un couplage optique à distance entre le guide de lumière et la diode électroluminescente. A côté de cette zone de couplage, et plus en périphérie, la zone de sortie et d'extraction comporte une zone de structuration d'extraction avec une distribution de petits motifs réflectifs juxtaposés, pour extraire la lumière de l'intérieur du guide de lumière et la distribuer sensiblement uniformément vers la partie visible à éclairer;
- la figure 7 représente, de façon schématisée, un circuit électrique équivalent du dispositif proposé, avec une micro-génératrice, générant un signal alternatif, qui est connectée en parallèle avec deux diodes électroluminescentes en polarité inversée. De cette manière, pendant l'alternance du signal, l'une ou l'autre des diodes émettra de la lumière. Pour des fréquences supérieures à 30 Hz, l'œil ne distingue plus cette alternance et perçoit les deux diodes allumées en même temps;
- la figure 8 représente la forme du courant (en ordonnée) dans les diodes électroluminescentes, en fonction du temps (en abscisse), pour une rotation à 150 Hz;
- la figure 9 représente la forme du courant moyen (en ordonnée) dans les diodes électroluminescentes en fonction de la fréquence de rotation (en abscisse) du rotor;
- la figure 10 représente la forme du couple moyen de freinage appliqué au rotor (en ordonnée) par les diodes électroluminescentes en fonction de la fréquence de rotation du rotor (en abscisse);
- la figure 11 représente, de façon schématisée, une variante du circuit équipant le rotor, où chaque diode électroluminescente est alimentée indirectement depuis les bobines, au travers d'un circuit électrique ou/et électronique qui comprend un redresseur à pont de Graetz et un condensateur de sortie de ce redresseur;
- la figure 12 est un diagramme illustrant l'évolution de la tension, au cours du temps, aux bornes de la diode électroluminescente selon le branchement de la figure 11;
- la figure 13 est une courbe montrant l'influence de l'épaisseur du fil de bobine (en abscisse) sur la résistance de la bobine (en ordonnée);
- la figure 14 est une courbe montrant l'influence de l'épaisseur du fil de bobine (en abscisse) sur le courant dans les diodes électroluminescentes (en ordonnée);
- la figure 15 est une courbe montrant l'influence de l'épaisseur du fil de bobine (en abscisse) sur la tension induite (en ordonnée);
- la figure 16 est une courbe montrant l'influence de l'épaisseur du fil de bobine (en abscisse) sur le temps de décharge totale du barillet (en ordonnée);

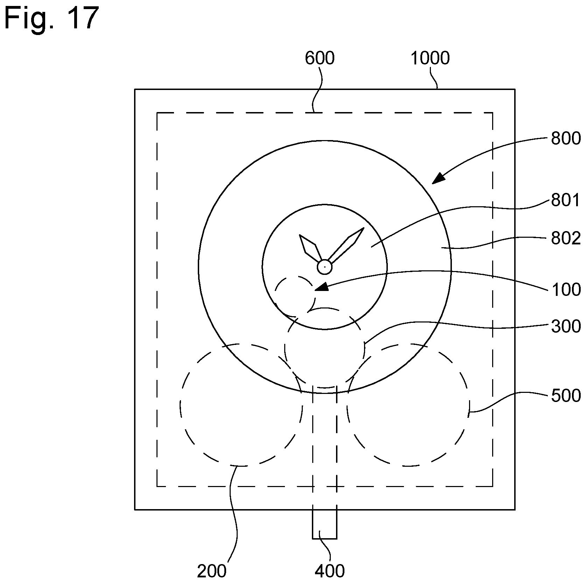

- la figure 17 représente, de façon schématisée, une pièce d'horlogerie qui comporte un dispositif de libération et d'arrêt de la micro-génératrice associé à un dispositif de commande actionnable par un utilisateur, pour déclencher l'entraînement du rotor de la micro-génératrice, ou à un mécanisme d'enclenchement incorporé dans le mouvement horloger.

Description détaillée de l'invention

L'invention se propose d'utiliser une micro-génératrice lumineuse pour l'éclairage d'une zone particulière d'une pièce d'horlogerie, laquelle est décrite ci-après en référence aux figures annexées.

L'invention concerne une pièce d'horlogerie 1000, comportant une micro-génératrice 100 du type horloger. Cette micro-génératrice 100 est formée d'un stator 20 comportant des aimants permanents 25 et d'un rotor 10 comportant des bobines 11 et au moins une diode électroluminescente 31, 32, laquelle est alimentée, directement ou indirectement au travers d'un circuit électrique ou/et électronique 37, 38, par au moins une des bobines 11 qui fournit un courant électrique induit lors de sa rotation par rapport au stator 20. Selon l'invention, le rotor 10 porte la totalité de l'équipement électrique et électronique formé par ladite au moins une diode électroluminescente, les bobines et, le cas échéant, ledit circuit électrique ou/et électronique agencé entre ladite au moins une des bobines et ladite au moins une diode électroluminescente (aussi nommée 'LED' par la suite).

De façon avantageuse, les aimants permanents 25 sont situés, en projection axiale selon une direction parallèle à l'axe de rotation du rotor 10, à l'intérieur d'une surface circulaire définie par le rotor 10 lorsqu'il tourne.

Les figures 1 à 5 illustrent un rotor 10 comportant des bobines 11, notamment des bobines plates (galettes), et un stator 20 comprenant une base annulaire 21, avec une section radiale en L, porteur d'une première partie des aimants permanents 25, et un flaque annulaire 22 de fermeture de la base annulaire et porteur d'une seconde partie des aimants permanents 25. La base annulaire et le flasque annulaire forment une cage statorique avec une section radiale en forme de C à trois portions droites. La micro-génératrice 100 a un diamètre généralement compris entre 6 mm et 15 mm.

La base annulaire 21 et le flasque 22 sont de préférence constitués par un matériau ferromagnétique formant une fermeture extérieure pour le champ magnétique des aimants permanents 25, lesquels sont à aimantation axiale et agencés du côté intérieur de la cage statorique, en regard des bobines 11 du rotor 10. Plus généralement, les bobines 11 et les aimants permanents 25 sont agencés de sorte que les bobines passent au moins partiellement au-dessus des aimants permanents lorsque le rotor 10 tourne, entraîné directement ou indirectement par un barillet 200 ou par tout moyen d'entraînement adéquat. On a donc une micro-génératrice 100 du type à aimantation axiale des aimants permanents 25 et une structure à « trois niveaux » avec le rotor 10 portant les bobines 11 placées dans le niveau intermédiaire, dans l'espace entre deux niveaux d'aimants permanents 25 situés respectivement des deux côtés axiaux des bobines 11. Les aimants 25 axialement en vis-à-vis ont une même polarité, deux aimants adjacents sur un même sur le même niveau présentent des polarités magnétiques opposées. Ainsi, classiquement, pour chacun des deux niveaux d'aimants, les polarités sont alternées.

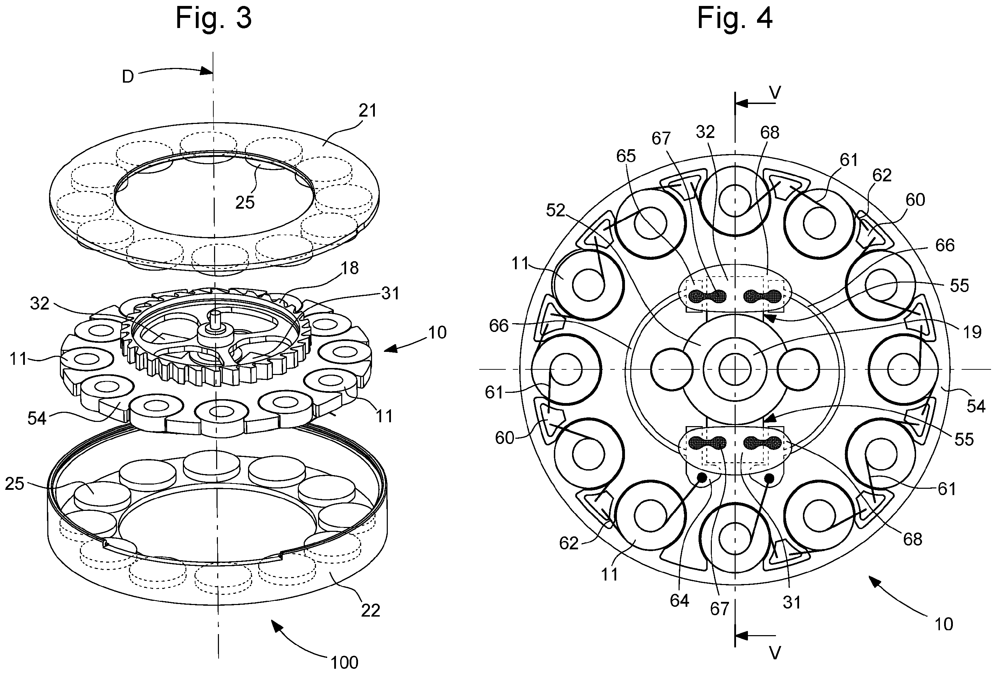

Dans une variante préférée, et tel que visible sur la figure 4, au moins une diode électroluminescente 31, respectivement 32 est alimentée directement par au moins une bobine 11 lors de sa rotation par rapport au stator 20 de la micro-génératrice 100, sans circuit électrique ou/et électronique entre ladite au moins une diode électroluminescente et ladite au moins une bobine, à l'exception de plages de contact et deux pistes circulaires, par exemple en or, en particulier sans condensateur et/ou autres composants électriques et/ou électroniques.

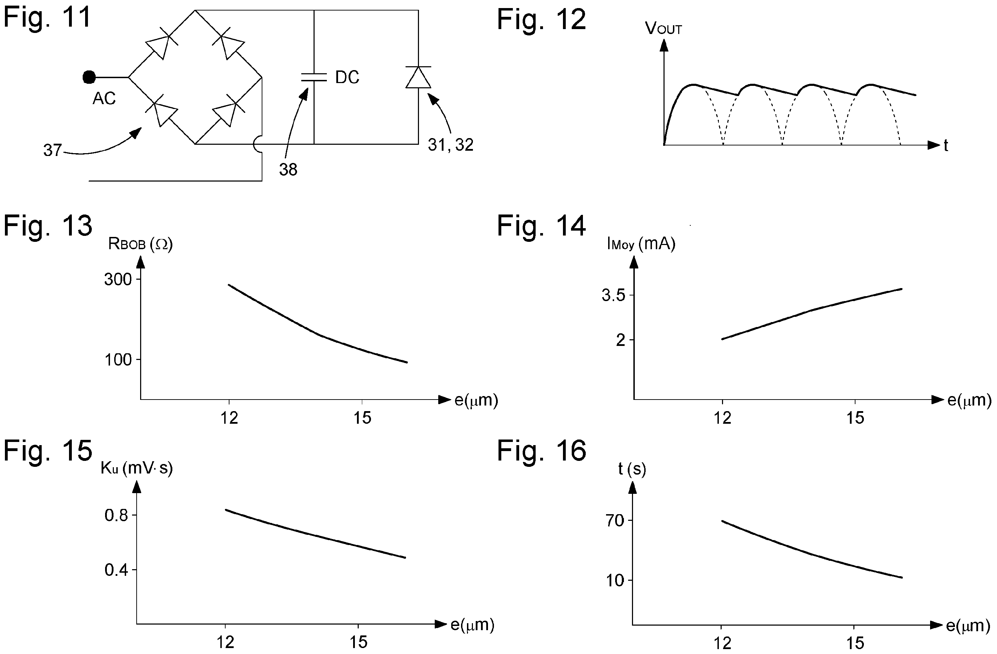

Dans une autre variante, et tel que visible en figure 11, au moins une dite diode électroluminescente 31, 32, est alimentée indirectement, au travers du circuit électrique ou/et électronique qui comprend un redresseur à pont de Graetz 37 et un condensateur de sortie 38 de ce redresseur, par au moins une bobine 11 fournissant un courant électrique induit lors de sa rotation par rapport au stator 20, de la micro-génératrice 100.

Plus particulièrement, et tel que visible sur les figures 1 à 5, le rotor 10 porte une paire de diodes électroluminescentes 31, 32, de préférence diamétralement opposées, agencées en polarités inverses l'une à l'autre.

Plus particulièrement, dans une variante non illustrée, le rotor 10 porte quatre diodes électroluminescentes (aussi nommées 'LEDs') à 90°, agencées deux à deux en polarités inverses (de préférence deux LEDs diamétralement opposées ayant une même polarité).

Selon une variante avantageuse, tout dispositif électrique et/ou électronique que comporte la pièce d'horlogerie est embarqué sur le rotor 10 de la micro-génératrice 100. Une pièce d'horlogerie mécanique échappe ainsi à tout câblage ou moyen de transfert d'énergie électrique hors du rotor 10.

En particulier, et tel que visible sur les figures 1 à 5, le rotor 10 et le stator 20 sont montés coaxiaux autour d'un axe de rotation D de la micro-génératrice 100, et ladite au moins une diode électroluminescente 31, 32, est montée excentrée par rapport audit axe de rotation D, chaque diode électroluminescente 31, 32, décrivant ainsi une surface annulaire pendant la rotation du rotor 10. Et ladite au moins une diode électroluminescente 31, 32, est agencée pour fournir au moins une majeure partie de la lumière 70 qu'elle émet à au moins une partie de la pièce d'horlogerie 1000 visible pour un utilisateur de cette pièce d'horlogerie, de sorte à illuminer cette au moins une partie visible.

Ainsi, les diodes électroluminescentes 31, 32, sont agencées sur le rotor 10 pour obtenir le meilleur résultat, et la structure extérieure du côté de l'émission de lumière doit être ajourée pour permettre à la lumière émise 70 de traverser en majeure partie cette structure extérieure, de préférence pour que substantiellement toute la lumière émise puisse traverser cette structure extérieure.

Aussi, plus particulièrement, tel que visible sur les figures 4 et 5, le rotor 10 comprend un moyeu 19 qui comprend un pignon d'entraînement 19a et qui porte une structure annulaire inférieure 52, un disque 54, par exemple en céramique, formant un support pour les bobines 11 agencées dans des ouvertures périphériques de ce disque et pour les deux LEDs 31, 32 agencées dans deux ouvertures respectives 55 du disque, et une roue dentée 18 située au-dessus des surfaces d'émission des LEDs 31, 32 et comportant des ouvertures 17 configurées pour laisser passer la lumière 70 émise par chacune de ces LEDs vers des moyens de guidage de cette lumière émise vers ladite au moins une partie visible de la pièce d'horlogerie. La roue dentée 18 est un rochet formant un dispositif de blocage et de libération de la micro-génératrice 100. La structure annulaire inférieure 52 est de préférence opaque et sans ouverture, de sorte à masquer les ouvertures 55, les plages de contact 65, les gouttes de colle 68 et les pistes circulaires 66. Les plages de contact 60 et les connexions des bobines 11 à ces plages de contact sont masqués à la vue d'un observateur par la base 22 de la cage statorique. Ainsi, hormis une petite portion des deux plages de contact 64 éventuellement visibles au travers de la fente circulaire située entre la structure annulaire 52 et la base 22, la micro-génératrice lumineuse 100 ne laisse apparaître aucun élément électrique ou électronique, l'exception des surfaces d'émission des LEDs, lesquelles ont une noble apparence et sont situées dans une région interne de cette micro-génératrice lumineuse. Une telle construction est particulièrement bien adaptée à un dispositif d'éclairage incorporé dans un mouvement mécanique haut de gamme. En plus, les liaisons électriques peuvent être prévues en or.

Le rotor 10 est entrainé par un barillet 200, au travers d'un rouage de barillet 300. Comme indiqué, la micro-génératrice 100 est équipée d'un dispositif 400 de blocage et de libération du rotor qui comprend le rochet 18 et un cliquet 92, ce dispositif permettant d'activer la micro-génératrice à la demande à la manière d'un régulateur de vitesse dans une montre musicale ou à sonnerie. Il est utilisé pour enclencher la rotation de la micro-génératrice à la demande et pour ensuite l'arrêter. Il est donc possible d'allumer brièvement plusieurs fois le système d'éclairage prévu (micro-génératrice lumineuse) sur une charge de barillet.

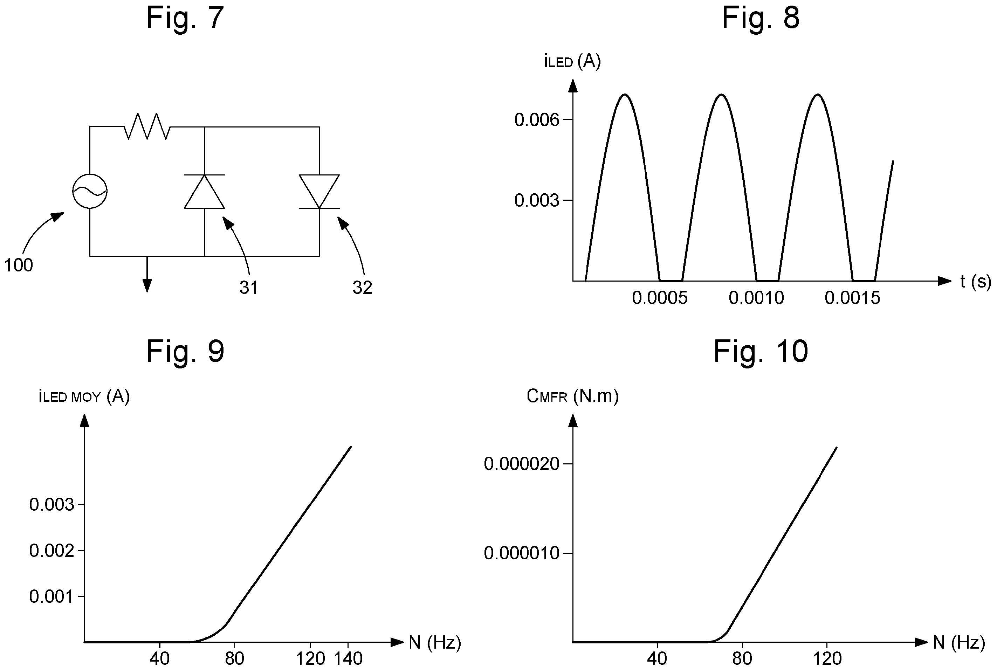

Le rotor 10 comprend un module composé du disque support 54 (notamment en matière céramique) qui porte un certain nombre de petites bobines 11 à sa périphérie ainsi qu'au moins une diode électroluminescente, notamment deux LEDs 31, 32. La rotation des bobines 11 dans le champ magnétique des aimants 25 du stator 20, génère une tension induite et ainsi un courant induit alternatif, lequel alimente les diodes électroluminescentes selon le schéma électrique équivalent donné en figure 7. Les bobines 11 sont connectées en série, avec des polarités alternées, l'extrémité intérieur 61 et l'extrémité extérieure 62 de chaque bobine étant reliées respectivement à deux plages de contact 60 formées sur le disque support 54. Cette pluralité de bobines est reliée aux deux LEDs, notamment via un circuit imprimé qui est constitué de deux plages de contact 64 pour deux extrémités respectives de deux bobines d'extrémité de la série de bobines et pour une connexion électrique 67 de la première LED 31 à ces bobines, de deux plages de contact 65 pour la connexion électrique 67 de la deuxième LED 32, et de deux pistes circulaires 66 reliant les deux plages de contact 64 respectivement aux deux plages de contact 65. Les deux LEDs 31, 32 sont agencées en polarisation inversée afin d'exploiter l'alternance du courant électrique généré dans ce système d'alimentation directe des LEDs par les bobines 11. Dans la variante avantageuse représentée, les plages de contact 64 et 65 et les deux pistes circulaires 66 sont directement imprimées / déposées sur le disque support. Ainsi aucun PCB classique en matériau synthétique n'est nécessaire. A noter que les connexions électriques 67 sont protégées par des gouttes de colle 68 qui servent aussi à la fixation des LEDs dans les ouvertures respectives 55 du disque support 54.

On peut donc fonctionner avec un circuit électrique aussi simple que celui représenté sur la figure 7.

Le courant $i_{LED}$ au cours du temps circulant dans chaque diode électroluminescente 31, 32 prend alors la forme visible sur la figure 8.

Ce qui compte pour la fréquence de rotation de la micro-génératrice est le courant moyen $i_{LED\,MOY}$, représenté sur la figure 9, ce qui se traduit par un couple moyen de freinage appliqué au rotor $C_{M\,FR}$ tel que représenté sur la figure 10.

Dans un exemple particulier, le barillet délivre au départ 20 $\mu$N·m au rotor, et on a une vitesse de rotation initiale qui est d'environ de 140 Hz, laquelle baisse avec la décharge du barillet. Sans puissance dissipée par les diodes électroluminescentes (LEDs), l'ensemble tournerait beaucoup plus vite. Concernant la tension induite dans les bobines, si on note: Ku le coefficient de tension induite pour une bobine (valeur max de la tension induite dans une bobine), $n_{BOB}$ le nombre de bobines, $\omega$ la vitesse de rotation (rad/s), et en considérant toutes les bobines alternées en série, la tension induite est $V_{IND}$ :

$$V_{IND} = \omega \cdot n_{BOB} \cdot K_U \cdot \sin(\omega \cdot n_{BOB}/2 \cdot t)$$

En effet la pulsation électrique est égale à $n_{BOB}/2$ multiplié par la vitesse de rotation $\omega$, car la tension induite est la dérivée de la variation de flux magnétique, qui passe une fois de + à - et la fois suivante de - à +. La tension induite est donc une fonction linéaire de la vitesse de rotation et donc de la fréquence de rotation.

En ce qui concerne la relation entre la tension induite et le courant dans la diode électroluminescente, elle est donnée par l'équation de Shockley, où Vt vaut 26mV à température ambiante et n est un paramètre de qualité compris entre 1 et 2 : $I = I_S \cdot (e^{V_{IND}/nV_t} - 1)$.

Les dimensions des aimants et bobines sont optimisées, telles que visibles en figure 5, pour une cage statorique relativement petite, avec un diamètre extérieur de 8,4 mm, et une épaisseur totale hors moyeu de 1,4 mm seulement.

Le nombre de spires et le diamètre du fil sont adaptés afin d'assurer le fonctionnement des diodes électroluminescentes. Un autre nombre de bobines, aimants et des dimensions différentes sont tout à fait envisageables. L'augmentation du volume des aimants 25, ou la diminution de l'entrefer, permet l'augmentation du couplage entre bobines 11 et aimants 25. Afin de maximiser les variations de flux, on rapproche au maximum les aimants 25 entre eux et les bobines 11 entre elles. Concernant les bobines 11, l'augmentation de leur volume ou la diminution du diamètre du fil permet d'augmenter le coefficient de tension induite Ku (défini comme le rapport de la tension induite par la vitesse de rotation) mais augmente également la résistance de la bobine. Dans ce cas, on diminue l'intensité du courant dans les diodes électroluminescentes mais on diminue également la vitesse de rotation du rotor, augmentant ainsi le temps de décharge du barillet et d'éclairage. Les figures 13 à 16 montrent les effets de l'épaisseur du fil de bobine 11 sur la résistance (figure 13), sur le courant dans les diodes (figure 14), sur la tension induite (figure 15), et sur le temps de décharge totale du barillet (figure 16).

Ainsi, en choisissant un diamètre de fil de 14 $\mu$m, on obtient une vitesse de rotor de 120 tours par seconde, barillet chargé, ce qui, avec une réserve de marche de l'ordre de 5500 tours rapportée au rotor, permet une illumination de plus de 40 secondes.

Il s'agit ensuite d'utiliser au mieux ce potentiel d'énergie lumineuse pour éclairer de façon efficace une zone de la pièce d'horlogerie 1000, visible par l'utilisateur.

Comme exposé plus haut, le rotor 10 porte une roue ajourée 18 comportant des ouvertures 17 pour laisser passer la lumière 70 émise par chaque diode électroluminescente 31, 32, vers des moyens de guidage de cette lumière émise vers au moins une partie visible de la pièce d'horlogerie.

La pièce d'horlogerie 1000 comporte, au voisinage de la micro-génératrice 100, au moins une structure guide de lumière stationnaire 40, qui est agencée pour collecter, pour toute position angulaire du rotor lorsque celui-ci tourne, ladite au moins une majeure partie de la lumière émise par chaque diode électroluminescente 31, 32, et pour ensuite guider cette lumière émise vers cette au moins une partie visible de la pièce d'horlogerie, de manière à obtenir une illumination de cette partie visible sensiblement constante et/ou sensiblement uniforme lorsque cette au moins une diode électroluminescente émet.

Plus particulièrement, cette au moins une structure guide de lumière stationnaire 40 comporte au moins un guide de lumière 45 qui comporte, d'une part au moins une zone d'introduction et d'injection 41 superposée à la trajectoire de la lumière émise par la diode électroluminescente 31, 32, pendant la rotation de la micro-génératrice 100 et agencée pour introduire cette lumière émise dans ce guide de lumière 45, et d'autre part au moins une zone de sortie et d'extraction 42 de la lumière introduite dans le guide de lumière hors de ce guide de lumière 45; cette au moins une zone de sortie et d'extraction 42 est agencée de sorte à obtenir un éclairage spécifique de cette au moins une partie visible de la pièce d'horlogerie 1000.

Plus particulièrement, ladite au moins une zone d'introduction et d'injection 41 fait face à la zone d'émission de lumière de la diode électroluminescente 31, 32, et comporte au moins une zone de structuration de couplage 805. Cette zone de structuration de couplage 805 est structurée avec un profil rugueux diffusif, qui est agencé pour coupler la lumière à l'intérieur du guide de lumière 45, de façon à effectuer un couplage optique à distance entre le guide de lumière 45 et ladite au moins une diode électroluminescente 31, 32, dont certains rayons lumineux sont déviés dans un cône d'acceptance du guide de lumière 45 et restent guidés par réflexion totale à l'intérieur du guide de lumière 45 jusqu'à leur incidence sur la au moins une zone de sortie et d'extraction.

Plus particulièrement, ladite au moins une zone de sortie et d'extraction 42 comporte au moins une zone de structuration d'extraction 804, laquelle présente une distribution de petits motifs réflectifs distincts, chacun de diamètre inférieur à 0,2 mm, et qui est prévue pour extraire la lumière introduite dans le guide de lumière 45 et en la distribuant sensiblement uniformément vers ladite au moins une partie visible de la pièce d'horlogerie 1000.

Plus particulièrement, ladite au moins une zone d'introduction et d'injection 41 et ladite au moins une zone de sortie et d'extraction 42 ne sont pas superposées en projection dans un plan perpendiculaire à l'axe de rotation D de la micro-génératrice 100.

On comprend l'intérêt d'un agencement particulier du guide de lumière 45, de manière à récolter la lumière dans ce guide pour toute position angulaire de ladite au moins une diode électroluminescente 31, 32.

Une variante préférée comporte un masquage complet de l'anneau de lumière engendré par chaque diode électroluminescente 31, 32. Ainsi, plus particulièrement, la zone d'émission de lumière de ladite au moins une diode électroluminescente 31, 32, est masquée à la vue de l'utilisateur de la pièce d'horlogerie 1000 par une partie opaque 801.

On peut aussi choisir une autre variante avec un effet optique différent, pour au contraire mettre en évidence le fait que la source de lumière est globalement annulaire, dans ce cas on ne masquera pas l'anneau de lumière.

Plus particulièrement, ladite au moins une structure guide de lumière stationnaire 40 apte à diffuser la lumière issue de la diode électroluminescente 31, 32, pour fournir une illumination indirecte d'une partie de la pièce d'horlogerie 1000, comporte au moins une partie transflective 802 au niveau de ladite au moins une partie visible de la pièce d'horlogerie 1000.

Plus particulièrement, ladite au moins une zone de structuration d'extraction 804 est structurée pour que l'extraction ne soit pas uniforme, avec le coefficient d'intensité lumineuse extrait par unité de surface qui n'a pas une valeur constante sur toute la surface.

Plus particulièrement, ladite au moins une zone de structuration d'extraction 804 est configurée de manière que l'intensité lumineuse extraite est sensiblement constante.

Plus particulièrement, la pièce d'horlogerie 1000 comporte au moins un cadran 800 dont une première partie est une telle partie visible de la pièce d'horlogerie et est éclairable par au moins une partie transflective 802 de ladite au moins une structure guide de lumière stationnaire 40, et dont une deuxième partie est cachée par une partie opaque 801 de ladite au moins une structure guide de lumière stationnaire 40. Plus particulièrement et non limitativement, cette partie opaque 801 cache ladite au moins une micro-génératrice 100 et chaque diode électroluminescente 31, 32.

Plus particulièrement, on effectue l'éclairage d'un cadran par une structure guide de lumière en saphir et une micro-génératrice lumineuse, c'est-à-dire comportant une source lumineuse, telle que présentée plus haut.

Un système optique particulier a été développé pour l'éclairage du pourtour d'un cadran dans l'obscurité. La méthode a consisté à modéliser le système, par exemple à l'aide du module « Backlight Optimisation ® » du logiciel de « raytracing Lighttools ® », ou similaire. Premièrement, nous avons défini les propriétés de la source lumineuse. Comme décrit auparavant, deux diodes électroluminescentes sont agencées en positions diamétralement opposées sur le rotor 10 de la micro-génératrice 100. Quand ce rotor 10 tourne à haute vitesse, ces deux diodes électroluminescentes 31, 32, tournent aussi, générant ainsi un anneau lumineux. La simulation a ainsi utilisé comme source de lumière un anneau lumineux statique.

Tel que visible en figure 6, un guide de lumière 45 en saphir est agencé au-dessous du cadran 800. Le saphir est choisi car il s'agit d'un matériau approprié pour la haute horlogerie. Le guide de lumière 45 est en forme de disque annulaire, par exemple et non limitativement d'une épaisseur de 0.4 mm, d'un diamètre extérieur de 38 mm et d'un diamètre intérieur de 14 mm. Cette géométrie a été choisie afin de contraindre la lumière à circuler en périphérie de la pièce et à être donc concentrée dans la zone à illuminer. La face en-dessous du disque (celle en face de la micro-génératrice 100) présente deux types de structurations: zone de structuration de couplage 805 et zone de structuration d'extraction 804.

La zone de structuration de couplage 805 est structurée avec un profil rugueux diffusive, dont la fonction est de coupler la lumière à l'intérieur du disque. Le fait que les sources de lumière soient en mouvement, empêche de réaliser un couplage optique rapproché avec le guide de lumière. Ceci se fait donc à distance. En traversant la zone de couplage, certains rayons provenant de l'anneau lumineux sont déviés dans le cône d'acceptance du guide de lumière en saphir 45 et restent guidés par réflexion totale à l'intérieur de celui-ci. La dimension de la zone de couplage est adaptée aux dimensions de la micro-génératrice 100 et à la distance entre celle-ci et le guide de lumière 45. Il est inutile, voire désavantageux, d'élargir la zone de couplage au-delà de la surface du guide investie par le cône de lumière. En fait, la structure de couplage peut aussi contribuer à l'extraction de la lumière au détriment de la luminosité totale de la zone que nous souhaitons éclairer.

La deuxième structuration de surface, est la zone de structuration d'extraction 804, caractérisée par une distribution de petits motifs réflectifs, notamment et non limitativement des ronds, d'environ 0.12 mm de diamètre, et a la fonction d'extraire la lumière de l'intérieur du guide de lumière 45 en la distribuant uniformément tout autour de la pièce. La distribution des motifs réflectifs est calculée par l'algorithme du logiciel. Cette distribution des motifs réflectifs n'est pas uniforme, et la densité varie localement pour que la lumière extraite soit pareille tout autour de la pièce et ainsi uniforme. Le point de départ du calcul est une densité uniforme de rond distribuée dans la zone qu'on souhaite éclairer. Ensuite l'algorithme du logiciel cherche une distribution de densité de motifs telle que la lumière soit extraite de manière uniforme sur tout le pourtour du disque. Dans le calcul de cette distribution le logiciel tient précisément compte de la géométrie du guide de lumière, la matière dont il est composé, et de la zone d'injection de la lumière dans ce guide de lumière et de la distribution lumineuse incidente sur cette zone d'injection. L'avantage de cette méthode de calcul de la matrice de motifs, notamment de petits ronds distincts, réside dans le fait que l'uniformité de l'éclairage est normalement assurée indépendamment des propriétés réelles de réflectivité des motifs.

Si les motifs ont une petite réflectivité, la quantité totale de lumière extraite sera petite. Si les motifs ont une grande réflectivité, la quantité totale de lumière extraite sera grande. Mais dans les deux cas l'uniformité de l'éclairage sera pareil. La lumière extraite du guide traverse la zone périphérique du cadran et l'illumine depuis l'arrière. Pour cela, le cadran sera réalisé dans une matière transflective telle qu'une céramique blanche fine, ou comme plus couramment utilisé en horlogerie, une céramique émaillée.

Les structurations de surface du guide de lumière décrites ci-dessus sont difficiles à réaliser mécaniquement sur un matériau dur comme le saphir. Par contre, elles sont tout à fait réalisables avec un usinage laser pico- et femto.

On comprend que, pour un bon résultat, il faut configurer la zone d'extraction de lumière pour que l'extraction ne soit pas constante, c'est-à-dire que le coefficient d'intensité lumineuse extrait par unité de surface n'est pas un coefficient constant, étant donné que la lumière est injectée localement dans le guide de lumière. Il est avantageux de configurer la structure de la zone d'extraction de lumière de manière que l'intensité lumineuse extraite soit sensiblement constante.

Des configurations d'utilisation très différentes sont possibles, car le système optique mis au point pour l'invention autorise un déport important entre d'une part la source lumineuse constituée par l'anneau de lumière émis par chaque diode électroluminescente, et d'autre part une zone visible à éclairer, qui peut être relativement éloignée de la micro-génératrice dans la pièce d'horlogerie.

Par exemple on peut choisir une configuration d'éclairage d'un cadran 800, avec au moins une zone du cadran 800 éclairée, le guide de lumière 45 étant agencé sous ce cadran 800. Il est également possible de réaliser un anneau lumineux superposé à un tour d'heure et/ou à une graduation horaire.

De façon avantageuse, la pièce d'horlogerie 1000 comporte au moins un dispositif de commande 400 de la micro-génératrice 100, permettant la libération et l'arrêt sur commande de cette micro-génératrice via un dispositif de blocage et de libération du rotor 10 que comporte ce dispositif de commande. Le dispositif de commande 400 est actionnable par un utilisateur pour déclencher l'entraînement du rotor 10 de la micro-génératrice 100 et ensuite pour le stopper, ce dispositif de commande comportant un organe de commande externe, en particulier un bouton-poussoir ou une targette. Dans un autre mode de réalisation, le dispositif de commande comprend un mécanisme d'enclenchement 500 actionnable par le mouvement horloger 600 que comporte la pièce d'horlogerie 1000. Ces mécanismes sont bien connus dans les montres à sonnerie ou à répétition. L'utilisateur peut notamment libérer la micro-génératrice en pressant sur un bouton-poussoir actionnant une bascule. La lumière reste enclenchée jusqu'à que le bouton-poussoir soit relâché. Dans l'autre mode de réalisation mentionné ci-avant, le mécanisme d'enclenchement du mouvement horloger agit par exemple sur une même bascule, notamment au moyen d'une bascule intermédiaire, de préférence durant un laps de temps déterminé. Tout système similaire peut être imaginé pour allumer et éteindre la lumière à la commande. En particulier, les différents mécanismes prévus sont agencés pour libérer momentanément le cliquet 92 du rochet 18 et autoriser ainsi la rotation du rotor 10.

Plus particulièrement, la pièce d'horlogerie 1000 comporte au moins un mécanisme d'entraînement qui est agencé pour l'entraînement du rotor 10 de la micro-génératrice 100.

Les avantages de l'invention sont multiples.

L'agencement des diodes électroluminescentes directement sur la micro-génératrice permet de ne pas avoir recours à une connectique de contacts frottants, ou des fils conducteurs ou des pistes de circuit imprimé ou PCB. Ceci assure la compatibilité avec l'horlogerie haut de gamme. Leur agencement avantageux sur le rotor permet d'éviter la présence de tout composant électronique composé de matériaux non compatibles avec une montre mécanique haut de gamme. Les diodes électroluminescentes sont alors les seuls composants qualifiables « d'électronique » mais leur composition est inorganique et la grande majorité du volume est composé de cristal et métal. Par ce fait, l'agencement proposé est esthétiquement discret et compatible aussi avec une construction de montre squelette avec un système apparent.

L'alimentation d'une ou plusieurs diodes électroluminescentes est possible sans avoir recours à une pile ou batterie. On peut certes employer une capacité de lissage embarquée sur le rotor, mais cela ne semble pas nécessaire car le rotor tourne avec une relativement haute vitesse de sorte que la variation périodique de luminosité n'est pas perceptible pour l'œil humain. En effet, le mode réalisation préféré de l'invention offre justement l'avantage de présenter un circuit passif sans aucun stockage d'énergie intermédiaire, grâce à l'alimentation de chaque diode directement par les bobines, sans nécessiter obligatoirement de redresseur de tension induite ou de capacité de lissage. La diode électroluminescente n'a pas de luminosité persistante lorsque le courant s'éteint, mais l'œil de l'utilisateur voit un éclairage persistant, car, avec une rotation de l'ordre de la centaine de hertz et par exemple 12 ou 14 pôles dans la micro-génératrice, on a un clignotement de l'ordre du kHz, imperceptible à l'œil. Quant à la rotation de la micro-génératrice, des petits couples de freinage un millier de fois par seconde vont agir comme lissage sur la vitesse de rotation. Un condensateur de stockage d'énergie n'est quant à lui pas souhaitable, car il n'aurait pas de variation de tension qui suive suffisamment vite la variation de tension induite, et présenterait une faible efficacité pour la régulation de vitesse.

La solution sans électronique autre qu'un éventuel pont de Graetz (passif) embarqué sur le rotor, et sans aucun accumulateur, garantit la pleine compatibilité avec une construction horlogère haut de gamme.

La possibilité d'activer la fonction lumineuse et de l'arrêter après un temps voulu est très avantageuse. Cette option n'est pas possible dans les montres connues de l'art antérieur.

Lorsque les diodes électroluminescentes (LEDs) tournent à haute vitesse, elles génèrent une distribution lumineuse annulaire quasi continue et uniforme pour l'œil humain et dont l'extension superficielle est beaucoup plus grande de celle d'une diode électroluminescente. De plus, l'agencement d'un guide de lumière avec une zone de couplage agencée pour collecter la lumière de l'anneau lumineux généré par les LEDs lorsque le rotor tourne est très avantageuse car ceci permet de transformer un anneau lumineux en un éclairage spécifique d'au moins une partie visible de la montre autre que ledit anneau lumineux, lequel est de préférence masqué à la vue directe d'un observateur, et de favoriser encore plus la constance de l'éclairage produit.

L'utilisation de la micro-génératrice lumineuse en combinaison avec un guide de lumière à distance afin de répartir la lumière ailleurs dans la montre est très avantageux, ceci permettant un effet lumineux ludique (décors lumineux) ou fonctionnel (lecture de l'heure ou de tout autre affichage), grâce à une ou plusieurs zone(s) extractrice(s) de lumière du guide de lumière, agencées de manière à obtenir de préférence une extraction sensiblement uniforme d'une surface lumineuse visible, en particulier pour l'éclairage d'un anneau du cadran d'une montre comportant une graduation horaire.

Nomenclature

D axe de rotation de la micro-génératrice
10 rotor
11 bobine
17 ouverture dans rochet
18 rochet
19 moyeu
19a pignon
20 stator
21 couvercle annulaire du stator
22 base annulaire du stator
25 aimant permanent
31, 32 diode électroluminescente (LED)
37 pont de Graetz
38 condensateur de sortie du pont de Graetz
40 structure guide de lumière stationnaire
41 zone d'introduction et d'injection
42 zone de sortie et d'extraction
45 guide de lumière
52 structure annulaire du rotor
54 disque support du rotor
55 ouverture dans le disque support
60 plage de contact
61, 62 partie d'extrémité des bobines
64, 65 plage de contact
67 connexion électrique des LEDs
68 goute de résine
70 lumière émise
100 micro-génératrice
200 barillet
300 rouage de barillet
400 dispositif de commande
500 mécanisme d'enclenchement
600 mouvement
800 cadran
801 partie opaque
802 partie transflective
1000 pièce d'horlogerie

**Revendications**

**1.** Pièce d'horlogerie (1000) comportant une micro-génératrice (100), formée d'un stator et d'un rotor et comprenant au moins une bobine (11) et des aimants permanents (25), et au moins une diode électroluminescente (31, 32) qui est alimentée, directement ou indirectement au travers d'un circuit électrique ou/et électronique (37, 38), par au moins une dite bobine (11) ; **caractérisée en ce que** le stator porte lesdits aimants permanents et le rotor porte ladite au moins une bobine qui fournit un courant électrique induit lors de sa rotation par rapport au stator (20) ; et **en ce que** le rotor (10) porte la totalité de l'équipement électrique et électronique formé par ladite au moins une diode électroluminescente, ladite au moins une bobine et, le cas échéant, ledit circuit électrique ou/et électronique.

**2.** Pièce d'horlogerie (1000) selon la revendication 1, **caractérisée en ce que** lesdits aimants permanents sont situés, en projection axiale, à l'intérieur d'une surface circulaire définie par ledit rotor lorsqu'il tourne.

**3.** Pièce d'horlogerie (1000) selon la revendication 1 ou 2, **caractérisée en ce qu'**au moins une dite diode électroluminescente (31, 32) est alimentée directement par au moins une dite bobine (11) lors de sa rotation par rapport au stator (20) de la micro-génératrice (100).

**4.** Pièce d'horlogerie (1000) selon la revendication 1 ou 2, **caractérisée en ce qu'**au moins une dite diode électroluminescente (31, 32) est alimentée indirectement, au travers dudit circuit électrique ou/et électronique qui comprend un redresseur à pont de Graetz (37), par au moins une dite bobine (11) fournissant un courant électrique induit lors de sa rotation par rapport au stator (20) de la micro-génératrice (100).

**5.** Pièce d'horlogerie (1000) selon l'une des revendications 1 à 4, **caractérisée en ce que** le rotor (10) porte au moins une paire de dites diodes électroluminescentes (31, 32), de préférence diamétralement opposées, agencées en polarités inverses l'une à l'autre.

**6.** Pièce d'horlogerie (1000) selon l'une des revendications 1 à 5, **caractérisée en ce que** tout dispositif électrique et/ou électronique que comporte la pièce d'horlogerie est embarqué sur ledit rotor (10) de la micro-génératrice (100).

**7.** Pièce d'horlogerie (1000) selon l'une des revendications 1 à 6, **caractérisée en ce que** le rotor (10) et le stator (20) sont montés coaxiaux autour d'un axe de rotation (D) de la micro-génératrice (100), et ladite au moins une diode électroluminescente (31, 32) est montée excentrée par rapport audit axe de rotation (D), chaque diode électroluminescente (31, 32) décrivant ainsi une surface annulaire pendant la rotation du rotor (10) ; et **en ce que** ladite au moins une diode électroluminescente (31, 32) est agencée pour fournir au moins une majeure partie de la lumière qu'elle émet à au moins une partie de la pièce d'horlogerie (1000) visible pour un utilisateur de cette pièce d'horlogerie (1000), de sorte à illuminer ladite au moins une partie visible de la pièce d'horlogerie (1000).

**8.** Pièce d'horlogerie (1000) selon la revendication 7, **caractérisée en ce que** le rotor (10) comprend un moyeu (19) qui porte encore un anneau ajouré (18) comportant des ouvertures (17) pour laisser passer la lumière émise par ladite au moins une diode électroluminescente (31, 32) vers des moyens de guidage de cette lumière émise vers ladite au moins une partie visible de la pièce d'horlogerie (1000).

**9.** Pièce d'horlogerie (1000) selon la revendication 7 ou 8, **caractérisée en ce que** cette pièce d'horlogerie comporte, au voisinage de la micro-génératrice (100), au moins une structure guide de lumière stationnaire (40) agencée pour collecter, pour toute position angulaire du rotor lorsque celui-ci tourne, ladite au moins une majeure partie de la lumière émise par ladite au moins une diode électroluminescente (31, 32) et pour ensuite guider cette lumière émise vers ladite au moins une partie visible de la pièce d'horlogerie, de manière à obtenir une illumination de cette partie visible sensiblement constante et/ou sensiblement uniforme lorsque ladite au moins une diode électroluminescente émet.

**10.** Pièce d'horlogerie (1000) selon la revendication 9, **caractérisée en ce que** ladite au moins une structure guide de lumière stationnaire (40) comporte au moins un guide de lumière (45) comportant, d'une part, au moins une zone d'introduction et d'injection (41) agencée pour recevoir de la lumière émise par ladite au moins une diode électroluminescente (31, 32) pendant la rotation de ladite au moins une micro-génératrice (100) et pour introduire de cette lumière émise dans ledit guide de lumière (45), et d'autre part au moins une zone de sortie et d'extraction (42) de lumière introduite dans le guide de lumière hors de ce guide de lumière, ladite au moins une zone de sortie et d'extraction étant agencée de sorte à obtenir un éclairage spécifique de ladite au moins une partie visible de la pièce d'horlogerie (1000).

**11.** Pièce d'horlogerie (1000) selon la revendication 10, **caractérisée en ce que** ladite au moins une zone d'introduction et d'injection (41) fait face à la zone d'émission de lumière de ladite au moins une diode électroluminescente (31, 32) et comporte au moins une zone de structuration de couplage (805) agencée pour coupler la lumière à l'intérieur dudit guide de lumière (45), de façon à effectuer un couplage optique à distance entre ledit guide de lumière (45) et ladite au moins une diode électroluminescente (31, 32), dont certains rayons lumineux situés dans un cône d'acceptance dudit guide de lumière (45) restent guidés par réflexion totale à l'intérieur dudit guide de lumière (45) jusqu'à leur incidence sur ladite au moins une zone de sortie et d'extraction.

12. Pièce d'horlogerie (1000) selon la revendication 10 ou 11, **caractérisée en ce que** ladite au moins une zone de sortie et d'extraction (42) comporte au moins une zone de structuration d'extraction (804) qui présente une distribution de petits motifs réflectifs distincts, chacun de diamètre inférieur à 0,2 mm, prévue pour extraire la lumière introduite dans le guide de lumière (45) en la distribuant sensiblement uniformément vers ladite au moins une partie visible de la pièce d'horlogerie (1000).

13. Pièce d'horlogerie (1000) selon la revendication 12, **caractérisée en ce que** ladite au moins une zone de structuration d'extraction (804) est structurée pour que l'extraction ne soit pas uniforme, avec le coefficient d'intensité lumineuse extrait par unité de surface qui n'a donc pas une valeur constante sur toute la surface.

14. Pièce d'horlogerie (1000) selon la revendication 13, **caractérisée en ce que** ladite au moins une zone de structuration d'extraction (804) est configurée de manière que l'intensité lumineuse extraite est sensiblement constante.

15. Pièce d'horlogerie (1000) selon l'une des revendications 10 à 14, **caractérisée en ce que** ladite au moins une zone d'introduction et d'injection (41) et ladite au moins une zone de sortie et d'extraction (42) ne sont pas superposées en projection dans un plan perpendiculaire à l'axe de rotation (D) de ladite micro-génératrice (100).

16. Pièce d'horlogerie (1000) selon la revendication 15, **caractérisée en ce que** la zone d'émission de lumière de ladite au moins une diode électroluminescente (31, 32) est masquée à la vue de l'utilisateur de ladite pièce d'horlogerie (1000) par une partie opaque (801).

17. Pièce d'horlogerie (1000) selon la revendication 16, **caractérisée en ce que** la pièce d'horlogerie comporte un cadran (800) agencé au-dessus de la structure guide de lumière stationnaire (40) et dont une première partie est une dite partie visible de ladite pièce d'horlogerie, laquelle est éclairable par ladite structure guide de lumière stationnaire (40), et dont une deuxième partie est ladite partie opaque (801).

18. Pièce d'horlogerie (1000) selon l'une des revendications 9 à 17, **caractérisée en ce que** ladite au moins une structure guide de lumière stationnaire (40) apte à diffuser la lumière issue de ladite au moins une diode électroluminescente (31, 32) pour fournir une illumination indirecte d'une partie de ladite pièce d'horlogerie (1000) comporte au moins une partie transflective (802) au niveau de ladite au moins une partie visible de la pièce d'horlogerie (1000).

19. Pièce d'horlogerie (1000) selon l'une des revendications 1 à 18, **caractérisée en ce que** la pièce d'horlogerie comporte un dispositif de libération et d'arrêt de ladite micro-génératrice (100) qui comprend un dispositif de commande (400) actionnable par un utilisateur pour déclencher l'entraînement dudit rotor (10) de la micro-génératrice (100), ledit dispositif de commande (400) comportant un organe de commande et/ou un bouton-poussoir et/ou une targette, et/ou un mécanisme d'enclenchement (500) actionnable par un mécanisme (600) que comporte ladite pièce d'horlogerie.

20. Pièce d'horlogerie (1000) selon l'une des revendications 1 à 19, **caractérisée en ce que** la pièce d'horlogerie comporte au moins un mécanisme d'entraînement agencé pour l'entraînement dudit rotor (10) de la micro-génératrice (100).

**Patentansprüche**

1. Zeitmesser (1000), umfassend einen Mikrogenerator (100), gebildet aus einem Stator und einem Rotor und umfassend mindestens eine Spule (11) und Permanentmagnete (25) sowie mindestens eine Elektrolumineszenzdiode (31, 32), die direkt oder indirekt von der mindestens einen Spule (11) über eine elektrische und/oder elektronische Schaltung (37, 38) gespeist wird; **dadurch gekennzeichnet, dass** der Stator die Permanentmagnete trägt und der Rotor die mindestens eine Spule trägt, die einen bei Drehung in Bezug auf den Stator (20) induzierten elektrischen Strom speist; und dass der Rotor (10) die gesamte elektrische und elektronische Ausrüstung trägt, die durch die mindestens eine Elektrolumineszenzdiode, die mindestens eine Spule und gegebenenfalls die elektrische und/oder elektronische Schaltung gebildet wird.

2. Zeitmesser (1000) nach Anspruch 1, **dadurch gekennzeichnet, dass** die Permanentmagnete in axialer Projektion innerhalb einer kreisförmigen Fläche angeordnet sind, die durch den Rotor definiert ist, wenn er sich dreht.

3. Zeitmesser (1000) nach Anspruch 1 oder 2, **dadurch gekennzeichnet, dass** die mindestens eine Elektrolumineszenzdiode (31, 32) direkt von der mindestens einen Spule (11) gespeist wird, wenn sie sich in Bezug auf den Stator (20) des Mikrogenerators (100) dreht.

4. Zeitmesser (1000) nach Anspruch 1 oder 2, **dadurch gekennzeichnet, dass** die mindestens eine Elektrolumineszenzdioden (31, 32) indirekt über die elektrische und/oder elektronische Schaltung, die eine Graetz-Gleichrichterbrücke (37) umfasst, durch die mindestens eine Spule (11) gespeist wird, die einen elektrischen Strom bereitstellt, der induziert wird, wenn sie sich in Bezug auf den Stator (20) des Mikrogenerators (100) dreht.

5. Zeitmesser (1000) nach einem der Ansprüche 1 bis 4, **dadurch gekennzeichnet, dass** der Rotor (10) mindestens ein Paar der Elektrolumineszenzdioden (31, 32) trägt, die bevorzugt diametral gegenüberliegend und in umgekehrter Polarität zueinander angeordnet sind.

6. Zeitmesser (1000) nach einem der Ansprüche 1 bis 5, **dadurch gekennzeichnet, dass** jedes in dem Zeitmesser umfasste elektrische und/oder elektronische System auf dem Rotor (10) des Mikrogenerators (100) montiert ist.

7. Zeitmesser (1000) nach einem der Ansprüche 1 bis 6, **dadurch gekennzeichnet, dass** der Rotor (10) und der Stator (20) koaxial um eine Drehachse (D) auf dem Mikrogenerator (100) montiert sind und die mindestens eine Elektrolumineszenzdiode (31, 32) exzentrisch zu dieser Drehachse (D) montiert ist, jede Elektrolumineszenzdiode (31, 32) somit eine ringförmige Fläche beschreibt, wenn sich der Rotor (10) dreht; und dass die mindestens eine Elektrolumineszenzdiode (31, 32) angeordnet ist, um mindestens einen Großteil des von ihr emittierten Lichts an mindestens einen Teil des Zeitmessers (1000) bereitzustellen, der für einen Benutzer dieses Zeitmessers (1000) sichtbar ist, um somit den mindestens einen sichtbaren Teil des Zeitmessers (1000) zu beleuchten.

8. Zeitmesser (1000) nach Anspruch 7, **dadurch gekennzeichnet, dass** der Rotor (10) eine Nabe (19) umfasst, die auch einen durchbrochenen Ring (18) trägt, der Öffnungen (17) aufweist, um das von der mindestens einen Elektrolumineszenzdiode (31, 32) emittierte Licht in Richtung von Mitteln für ein Leiten dieses emittierten Lichts zu dem mindestens einen sichtbaren Teil des Zeitmessers (1000) durchzulassen.

9. Zeitmesser (1000) nach Anspruch 7 oder 8, **dadurch gekennzeichnet, dass** dieser Zeitmesser, in der Nähe des Mikrogenerators (100), mindestens eine ortsfeste Lichtleiterstruktur (40) umfasst, die angeordnet ist, für jede beliebige Winkelstellung des Rotors, wenn dieser sich dreht, mindestens einen Großteil des von der mindestens einen Elektrolumineszenzdiode (31, 32) emittierten Lichts zu sammeln und dann dieses emittierte Licht zu dem mindestens einen sichtbaren Teil des Zeitmessers zu leiten, um eine im Wesentlichen konstante und/oder im Wesentlichen gleichmäßige Beleuchtung dieses sichtbaren Teils zu erreichen, wenn die wenigstens eine Elektrolumineszenzdiode emittiert.

10. Zeitmesser (1000) nach Anspruch 9, **dadurch gekennzeichnet, dass** die mindestens eine ortsfeste Lichtleiterstruktur (40) mindestens einen Lichtleiter (45) umfasst, der einerseits mindestens eine Einführungs- und Injektionszone (41), die angeordnet ist, das von der mindestens einen Elektrolumineszenzdiode (31, 32) emittierte Licht zu empfangen, während sich der mindestens eine Mikrogenerator (100) dreht, und dieses emittierte Licht in den Lichtleiter (45) einzuleiten, und andererseits mindestens eine Zone (42) umfasst, in der das in den Lichtleiter eingeleitete Licht aus diesem Lichtleiter austritt und extrahiert wird, wobei die mindestens eine Austritts- und Extraktionszone angeordnet ist, eine spezifische Beleuchtung des mindestens einen sichtbaren Teils des Zeitmessers (1000) zu erreichen.

11. Zeitmesser (1000) nach Anspruch 10, **dadurch gekennzeichnet, dass** die mindestens eine Einführungs- und Injektionszone (41) der lichtemittierenden Zone der mindestens einen Elektrolumineszenzdiode (31, 32) zugewandt ist und mindestens eine Kopplungsstrukturierungszone (805) umfasst, die angeordnet ist, das Licht innerhalb des Lichtleiters (45) einzukoppeln, um eine optische Fernkopplung zwischen dem Lichtleiter (45) und der mindestens einen Elektrolumineszenzdiode (31, 32) zu ermöglichen, wobei ein Teil der in einem Akzeptanzkegel des Lichtleiters (45) befindlichen Lichtstrahlen durch Totalreflexion innerhalb des Lichtleiters (45) bis zu ihrem Auftreffen auf die mindestens eine Austritts- und Extraktionszone geleitet wird.

12. Zeitmesser (1000) nach Anspruch 10 oder 11, **dadurch gekennzeichnet, dass** die mindestens eine Austritts- und Extraktionszone (42) mindestens eine Extraktionsstrukturierungszone (804) umfasst, die eine Verteilung von kleinen unterschiedlichen Reflexionsmustern mit einem Durchmesser von jeweils weniger als 0,2 mm aufweist, die dazu vorgesehen sind, das in den Lichtleiter (45) eingeleitete Licht durch im Wesentlichen gleichmäßiges Verteilen in Richtung des mindestens einen sichtbaren Teils des Zeitmessers (1000) zu extrahieren.

13. Zeitmesser (1000) nach Anspruch 12, **dadurch gekennzeichnet, dass** die mindestens eine Extraktionsstrukturierungszone (804) derart strukturiert ist, dass die Extraktion nicht gleichmäßig erfolgt, wobei der pro Flächeneinheit extrahierte Lichtstärkekoeffizient daher nicht über die gesamte Fläche einen konstanten Wert aufweist.

14. Zeitmesser (1000) nach Anspruch 13, **dadurch gekennzeichnet, dass** die mindestens eine Extraktionsstrukturierungszone (804) ausgestaltet ist, sodass die extrahierte Lichtstärke im Wesentlichen konstant ist.

15. Zeitmesser (1000) nach einem der Ansprüche 10 bis 14, **dadurch gekennzeichnet, dass** die mindestens eine Einführungs- und Injektionszone (41) und die mindestens eine Austritts- und Extraktionszone (42) in der Projektion in einer Ebene senkrecht zu der Drehachse (D) des Mikrogenerators (100) nicht übereinander liegen.

16. Zeitmesser (1000) nach Anspruch 15, **dadurch gekennzeichnet, dass** die lichtemittierende Zone der mindestens einen Elektrolumineszenzdiode (31, 32) vor dem Blick des Benutzers des Zeitmessers (1000) durch einen opaken Teil (801) verdeckt ist.

17. Zeitmesser (1000) nach Anspruch 16, **dadurch gekennzeichnet, dass** der Zeitmesser ein Zifferblatt (800) umfasst, das über der ortsfesten Lichtleiterstruktur (40) angeordnet ist und von dem ein erster Teil der sichtbare Teil des Zeitmesser ist, der von der ortsfesten Lichtleiterstruktur (40) beleuchtet werden kann, und ein zweiter Teil der opake Teil (801) ist.

18. Zeitmesser (1000) nach einem der Ansprüche 9 bis 17, **dadurch gekennzeichnet, dass** die mindestens eine ortsfeste Lichtleiterstruktur (40), die in der Lage ist, Licht von der mindestens einer Elektrolumineszenzdiode (31, 32) zu streuen, um eine indirekte Beleuchtung eines Teils des Zeitmessers (1000) bereitzustellen, mindestens einen transflektiven Teil (802) in dem mindestens einen sichtbaren Teil des Zeitmessers (1000) umfasst.

19. Zeitmesser (1000) nach einem der Ansprüche 1 bis 18, **dadurch gekennzeichnet, dass** der Zeitmesser eine Vorrichtung für ein Aktivieren und Deaktivieren des Mikrogenerators (100) umfasst, die eine Steuervorrichtung (400) umfasst, die von einem Benutzer betätigt werden kann, um den Antrieb des Rotors (10) an dem Mikrogenerator (100) freizugeben, wobei die Steuervorrichtung (400) ein Steuerorgan und/oder einen Knopf und/oder einen Riegel und/oder einen Verriegelungsmechanismus (500) umfasst, der durch einen in dem Zeitmesser umfassten Mechanismus (600) betätigt werden kann.

20. Zeitmesser (1000) nach einem der Ansprüche 1 bis 19, **dadurch gekennzeichnet, dass** der Zeitmesser mindestens einen Antriebsmechanismus umfasst, der angeordnet ist, den Rotor (10) des Mikrogenerators (100) anzutreiben.

**Claims**

1. A timepiece (1000) comprising a microgenerator (100), formed by a stator and by a rotor and comprising at least one coil (11) and permanent magnets (25), and at least one electroluminescent diode (31, 32) which is powered by said at least one coil (11) directly or indirectly via an electrical and/or electronic circuit (37, 38) ; **characterised in that** the stator carries said permanent magnets and the rotor carries said at least one coil that powers an electric current induced when it rotates relative to the stator (20) ; and **in that** the rotor (10) carries all of the electrical and electronic equipment formed by said at least one electroluminescent diode, said at least one coil and, as the case may be, said electrical and/or electronic circuit.

2. The timepiece (1000) according to claim 1, **characterised in that** said permanent magnets are located, in axial projection, inside a circular surface defined by said rotor when it turns.

3. The timepiece (1000) according to claim 1 or 2, **characterised in that** at least one said electroluminescent diode (31, 32) is directly powered by at least one said coil (11) when it rotates relative to the stator (20) of the microgenerator (100).

4. The timepiece (1000) according to claim 1 or 2, **characterised in that** at least one said electroluminescent diode (31, 32) is indirectly powered, via said electrical and/or electronic circuit which comprises a Graetz rectifier bridge (37), by at least one said coil (11) providing an electric current induced when it rotates relative to the stator (20) of the microgenerator (100).

5. The timepiece (1000) according to any of claims 1 to 4, **characterised in that** the rotor (10) carries at least one pair of said electroluminescent diodes (31, 32), preferably diametrically opposed, arranged in reverse polarities to each other.

6. The timepiece (1000) according to any of claims 1 to 5, **characterised in that** any electrical and/or electronic system comprised in the timepiece is mounted on said rotor (10) on the microgenerator (100).

7. The timepiece (1000) according to any of claims 1 to 6, **characterised in that** the rotor (10) and the stator (20) are coaxially mounted around an axis of rotation (D) on the microgenerator (100), and said at least one electroluminescent diode (31, 32) is eccentrically mounted relative to said axis of rotation (D), each electroluminescent diode (31, 32) thus describing an annular surface when the rotor (10) is rotating ; and **in that** said at least one electroluminescent diode (31, 32) is arranged to provide at least a major part of the light it emits to at least one part of the timepiece (1000) visible to a user of that timepiece (1000), so as to illuminate said at least one visible part of the timepiece (1000).

8. The timepiece (1000) according to claim 7, **characterised in that** the rotor (10) comprises a hub (19) which also carries a pierced bow (18) comprising openings (17) to allow the light emitted by said at least one electroluminescent diode (31, 32) to pass through towards means for guiding this emitted light towards said at least one visible part of the timepiece (1000).

9. The timepiece (1000) according to claim 7 or 8, **characterised in that** this timepiece comprises, in the vicinity of the microgenerator (100), at least one stationary light guide structure (40) arranged to collect, for any angular position of the rotor when the latter turns, said at least a major part of the light emitted by said at least one electroluminescent diode (31, 32) and then to guide this emitted light towards said at least one visible part of the timepiece, so as to achieve substantially constant and/or substantially uniform illumination of this visible part when said at least one electroluminescent diode is emitting.

10. The timepiece (1000) according to claim 9, **characterised in that** said at least one stationary light guide structure (40) comprises at least one light guide (45) comprising, on one hand, at least one introduction and injection zone (41) arranged to receive the light emitted by said at least one electroluminescent diode (31, 32) while said at least one microgenerator (100) is rotating and to introduce this emitted light into said light guide (45), and, on the other hand, at least one zone (42) in which the light introduced into the light guide exits and is extracted from this light guide, said at least one exit and extraction zone being arranged so as to achieve specific illumination of said at least one visible part of the timepiece (1000).

11. The timepiece (1000) according to claim 10, **characterised in that** said at least one introduction and injection zone (41) faces the light-emitting zone of said at least one electroluminescent diode (31, 32) and comprises at least one coupling structuring zone (805) arranged to couple the light inside said light guide (45), so as to enable remote optical coupling between said light guide (45) and said at least one electroluminescent diode (31, 32), with some of the light rays located in an acceptance cone of said light guide (45) being guided by total reflection inside said light guide (45) until their incidence on said at least one exit and extraction zone.

12. The timepiece (1000) according to claim 10 or 11, **characterised in that** said at least one exit and extraction zone (42) comprises at least one extraction structuring zone (804) which has a distribution of small distinct reflective patterns, each with a diameter of less than 0.2 mm, provided to extract the light introduced into the light guide (45) by distributing it substantially uniformly towards said at least one visible part of the timepiece (1000).

13. The timepiece (1000) according to claim 12, **characterised in that** said at least one extraction structuring zone (804) is structured so that the extraction is not uniform, with the coefficient of luminous intensity extracted per unit of surface area therefore not having a constant value over the entire surface.

14. The timepiece (1000) according to claim 13, **characterised in that** said at least one extraction structuring zone (804) is configured such that the luminous intensity extracted is substantially constant.

15. The timepiece (1000) according to any of claims 10 to 14, **characterised in that** said at least one introduction and injection zone (41) and said at least one exit and extraction zone (42) are not superimposed in projection in a plane perpendicular to the axis of rotation (D) of said microgenerator (100).

16. The timepiece (1000) according to claim 15, **characterised in that** the light-emitting zone of said at least one electroluminescent diode (31, 32) is masked from the view of the user of said timepiece (1000) by an opaque part (801).

17. The timepiece (1000) according to claim 16, **characterised in that** the timepiece comprises a dial (800) arranged above the stationary light guide structure (40) and a first part of which is a said visible part of said timepiece that can be illuminated by said stationary light guide structure (40) and a second part of which is said opaque part (801).

18. The timepiece (1000) according to any of claims 9 to 17, **characterised in that** said at least one stationary light guide structure (40) capable of diffusing light from said at least one electroluminescent diode (31, 32) to provide indirect illumination of part of said timepiece (1000) comprises at least one transflective part (802) in said at least one visible part of the timepiece (1000).

19. The timepiece (1000) according to any of claims 1 to 18, **characterised in that** the timepiece comprises a device for enabling and disabling said microgenerator (100), which comprises a control device (400) that can be actuated by a user to release the drive of said rotor (10) on the microgenerator (100), said control device (400) comprising a control organ and/or a button and/or a bolt, and/or an interlock mechanism (500) that can be actuated by a mechanism (600) comprised in said timepiece.

20. The timepiece (1000) according to any of claims 1 to 19, **characterised in that** the timepiece comprises at least one drive mechanism arranged to drive said rotor (10) on the microgenerator (100).

EP 4 443 247 B1

Fig. 1

Fig. 2A

Fig. 2B

EP 4 443 247 B1

Fig. 4

Fig. 3

Fig. 5

Fig. 6

# Fig. 7

100

31     32

# Fig. 8

iLED (A)

0.006

0.003

0.0005    0.0010    0.0015    t (s)

# Fig. 9

iLED MOY (A)

0.003

0.002

0.001

40    80    120  140    N (Hz)

# Fig. 10

CMFR (N.m)

0.000020

0.000010

40    80    120    N (Hz)

EP 4 443 247 B1

**Fig. 11**

**Fig. 12**

**Fig. 13**

**Fig. 14**

**Fig. 15**

**Fig. 16**

EP 4 443 247 B1

## Fig. 17

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3838424 A